# EUROPEAN PATENT APPLICATION

(11) **EP 4 391 258 A1**
(43) Date of publication of application: **26.06.2024**
(21) Application number: 22307028.5
(22) Date of filing: 23.12.2022
(51) Int. Cl.: H02G 1/00, B65H 55/04, H02G 11/00

(54) **A GUIDE DEVICE FOR CABLE BOXES**

(71) Applicant: Nexans, 92400 Courbevoie (FR)
(72) Inventor: LANDQVIST, Robert, 51495 GRIMSAS (SE); NYSTRÖM, Jenny, 51432 TRANEMO (SE)
(74) Representative: Ipsilon

(57) **Abstract**

The present invention relates to a guide device (10) for guiding a cable out from a cable box (2) having an access opening (5) defined with an access opening area (A5). The guide device (10) comprises a main body (11), a connector (14) provided on the main body (11) and connectable to the access opening (5), and a feed-out opening (15) provided in the main body (11) for guiding a cable (8) stored within the cable box (2) out from the cable box (2). The feed-out opening (15) has a feed-out opening area (A15) being smaller than the access opening area (A5). At least a part of the outer perimeter (11P) of the main body (11) is extending beyond the access opening (5).

## Description

### TECHNICAL FIELD

The invention relates to guiding cables, more particularly it relates to a guide device for guiding a cable out from a cable box having an access opening.

### BACKGROUND

During installation of a cable in a building, the cable is pulled into a conduit from a packaging box. Typically, the packaging box is a cardboard box containing the cable in the form of a cable coil. There is an access opening on the top facing side of the cardboard box. The access opening in cable box has two purposes. Guiding the cable when pulled out of the box. A further purpose is to allow a hand to be inserted into the box for retrieving the cable end from the box.

The cables tend to tangle as the cable creates a helix when it has exited the box. This may damage the cable if not corrected in time. In a tangle, the cable touches and crosses another section of the cable. If the cable is pulled further, the radius of the bent cable becomes smaller, ultimately leading to the breakage of the cable insulation and exposing bare copper wire. Hence, pulling the cable out from the box must be stopped each time entanglement occurs.

The aim of the invention is to address the problems above by simplifying the installation of a cable by reducing the tangling of a cable when pulled out from a box.

### SUMMARY OF THE INVENTION

The present invention relates to a guide device for guiding a cable out from a cable box having an access opening defined with an access opening area; wherein the guide device comprises:
- a main body with an outer perimeter;
- a connector provided on the main body and connectable to the access opening;
- a feed-out opening provided in the main body for guiding a cable stored within the cable box out from the cable box;

wherein the feed-out opening has a feed-out opening area;
wherein the feed-out opening area is smaller than the access opening area;
wherein at least a part of the outer perimeter of the main body is extending beyond the access opening.

In one aspect, a centre of the connector is aligned with a centre of the feed-out opening.

In one aspect, the feed-out opening has a rectangular shape.

In one aspect, the feed-out opening has a circular shape or an elliptical shape.

In one aspect, the feed-out opening has a triangular, a hexagonal or octagonal shape.

In one aspect, the feed-out opening area is 1% to 30% of the access opening area.

In one aspect, the main body is disc-shaped.

In one aspect, the disc-shaped main body is planar.

In one aspect, the main body is circular having a diameter larger than a diameter of the access opening.

In one aspect, the connector is connectable to the access opening by pushing the connector into the access opening.

In one aspect, the connector is circular.

In one aspect, the connector comprises at least three connector segments.

In one aspect, the at least three connector segments are spaced apart from each other.

In one aspect, the connector comprises a locking device.

In one aspect, at least some of the at least three connector segments comprise a locking device.

In one aspect, the feed-out opening is provided with a guiding surface for guiding the cable out from the cable box.

### DETAILED DESCRIPTION

Fig. 1 - Prior art, top view of cable box;
Fig. 2 - Prior art, cross-sectional side view of cable box;
Fig. 3 - Top view of cable box with location of guide device indicated relative to the cable box;
Fig. 4 - top view of first embodiment of guide device;
Fig. 5 - Cross-sectional side view of the first embodiment;
Fig. 6 - Cross-sectional side view of the first embodiment installed in the cable box;
Fig. 7 - Top view of a second embodiment;
Fig. 8 - Bottom view of the second embodiment;
Fig. 9 - Bottom view of a third embodiment;
Fig. 10 - Bottom view of a fourth embodiment;
Fig. 11 - Bottom view of a fifth embodiment;
Fig. 12 - Cross-sectional side view of an alternative embodiment of the connector;
Fig. 13 - Top view of a sixth embodiment of the guide device;
Fig. 14 - Cross -sectional side view of an embodiment with a guiding surface.

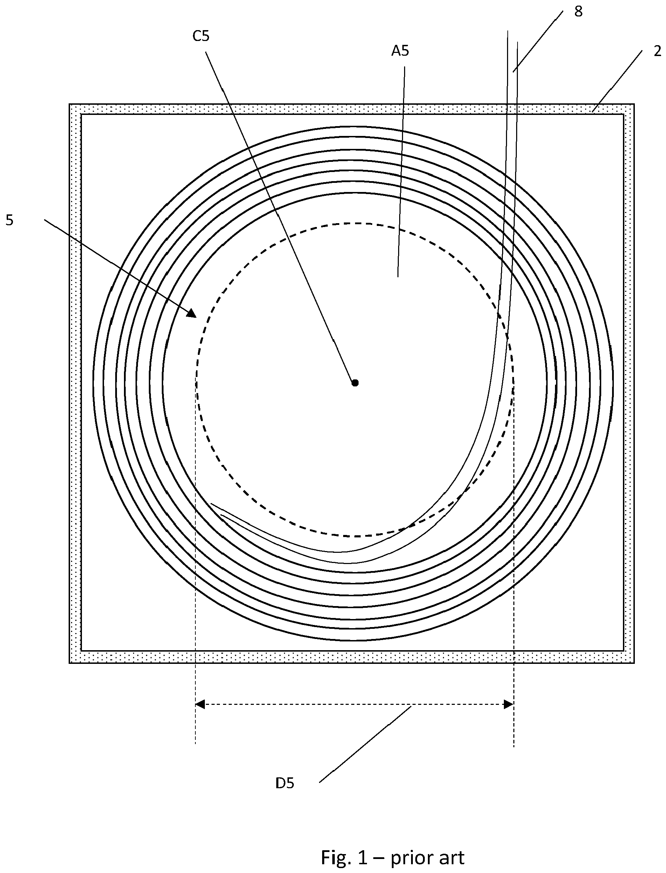

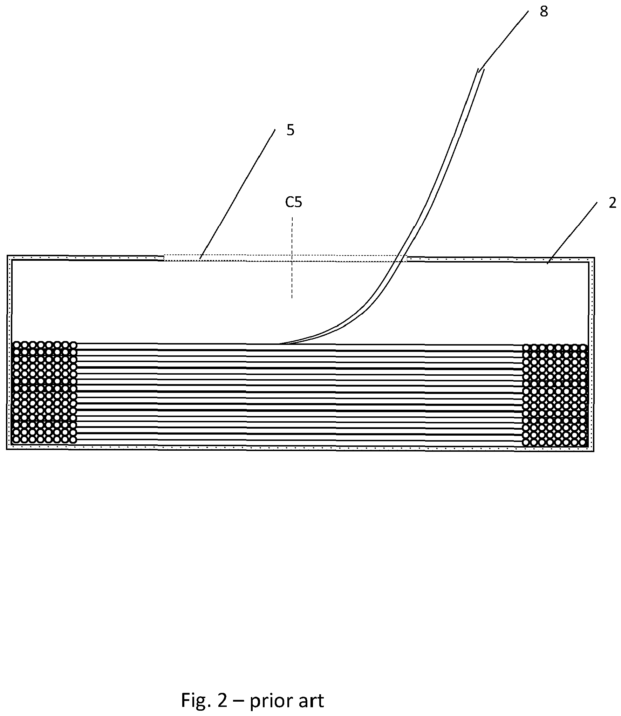

Initially, it is referred to fig. 1 and fig. 2. Here it is shown a cable box 2 in which a cable 8 is rolled up. The cable box 2 comprises a circular access opening 5 defined with an access opening area A5 and a diameter D5.

Several manufacturers use the same type of cable box. This commonly used cable box is made of cardboard and has a diameter D5 of the circular access opening 5 being 90 mm. A centre of the access opening 5 is indicated as C5 in figs. 1 and 2.

When an electrician or other user of the cable is starting the installation of the cable, the access opening 5 is opened tearing away the cardboard piece being present in the access opening 5. The electrician inserts his/her hand into the box 2 in order to retrieve the end of the cable out from the box. In prior art, the access opening itself serves the purpose of guiding the cable out from the box.

### First embodiment

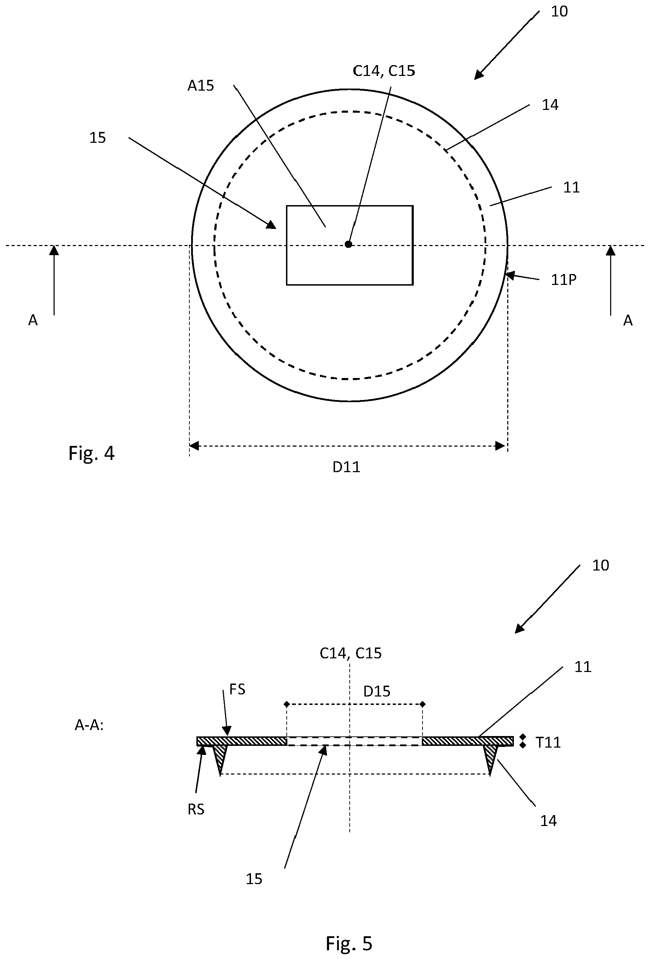

It is now referred to fig. 4 and 5, in which a first embodiment of a guide device 10 is shown. The guide device 10 comprises a main body 11, a connector 14 provided on the main body 11 and a feed-out opening 15 provided in the main body 11.

The main body 11 is here a planar and disc-shaped, and will typically be made from a polymer material such as a thermoplastic. A thickness T11 of the disc-shaped body is indicated in fig. 5. The thickness T11 may be 1 - 7 mm, preferably 2 - 4 mm. The main body 11 is circular, as indicated by an outer perimeter 11P in fig. 4, having a diameter D11 being larger than the diameter D5 of the access opening 5. In the present embodiment, the diameter D11 is ca 100 mm.

The connector 14 is shaped as a tapering, ring-shaped element as shown in fig. 4 and fig. 5. In fig. 4, the ring-shape of the connector 14 is indicated as a dashed circle. It should be noted that as long as the main body 11 is not transparent, the connector 14 is not visible on the top side of the main body 11 shown in fig. 4. In fig. 5 it is shown that the cross section of the connector 14 forms an apex. The connector 14 and the main body 11 will typically be made as one single body, for example manufactured by injection moulding, an additive manufacturing process etc. Alternatively, the connector 14 and the main body 11 are made as two separate bodies connected to each other, for example by means of fasteners, adhesives etc.

The feed-out opening 15 is in the present embodiment rectangular, as shown in fig. 4. A centre C15 is indicating the centre of the feed-out opening 15. The centre C5 coincides with a centre C14 indicating the centre of the connector 14.

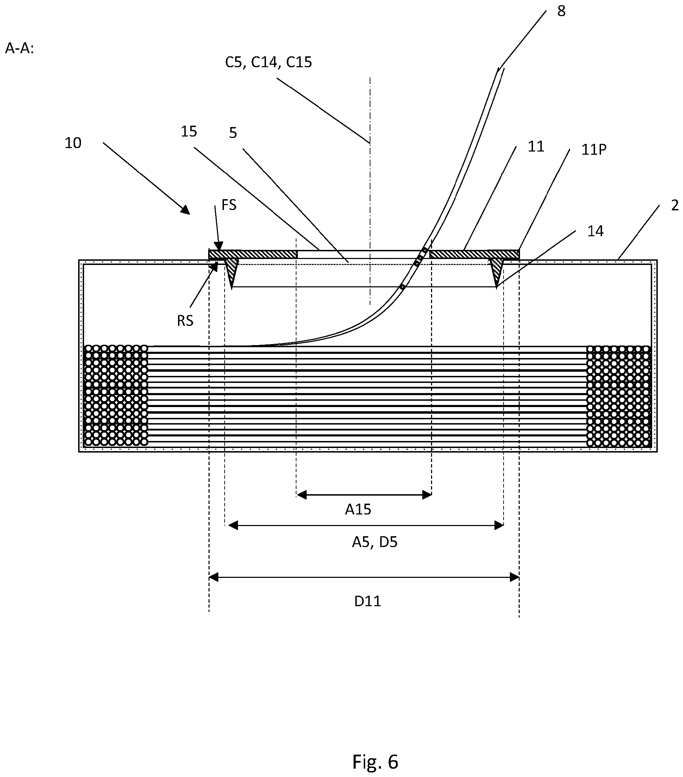

The connector 14 serves the purpose of connecting the guiding device 10 to the access opening 5. It is now referred to fig. 6. Here it is shown that the connector 14 is connected to the access opening 5 by pushing the connector 14 into the access opening 5 until a rear side RS of the main body 11 comes into contact with the box 2. The tapering shape of the connector 14 will deform the cardboard material of the box 2 slightly, causing the connector 14 to maintain its position relative to the access opening 5. A front side FS on the opposite side of the rear side RS is facing away from the box 2.

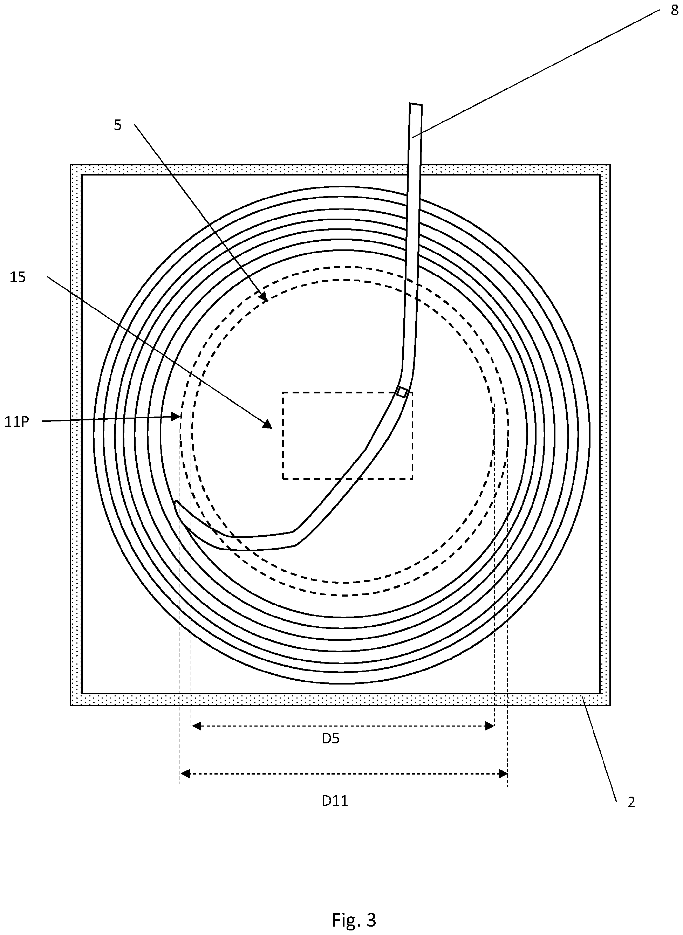

As shown in fig. 3 and fig. 6, the perimeter 11P of the main body 11 is extending beyond the access opening 5 along the entire circumference of the access opening 5. Hence, the access opening 5 is only accessible via the feed-out opening 15.

As the connector 14 is positioned relative to the access opening 5, the centre C14 of the connector 14 is coinciding with the centre C5 of the access opening 5. As the centre C15 of the feed-out opening 15 is coinciding with the centre C14 of the connector 14, the centre C15 of the feed-out opening 15 will also be coinciding with the centre C5 of the access opening 5.

As is apparent from fig. 6 feed-out opening area A15 is smaller than the size of the access opening area A5. Preferably, the feed-out opening area A15 is 1% to 30% of the access opening area A5. In the present embodiment, the rectangular feed-out opening 15 has a dimension of 45.0 mm x 35.3 mm, i.e. an area of 15.89 cm2, while the access opening area A5 is π x 45 mm x 45 mm, i.e. 63.6 cm2. Hence, the feed-out opening area A15 is here ca 25% of the access opening area A5.

### Second embodiment

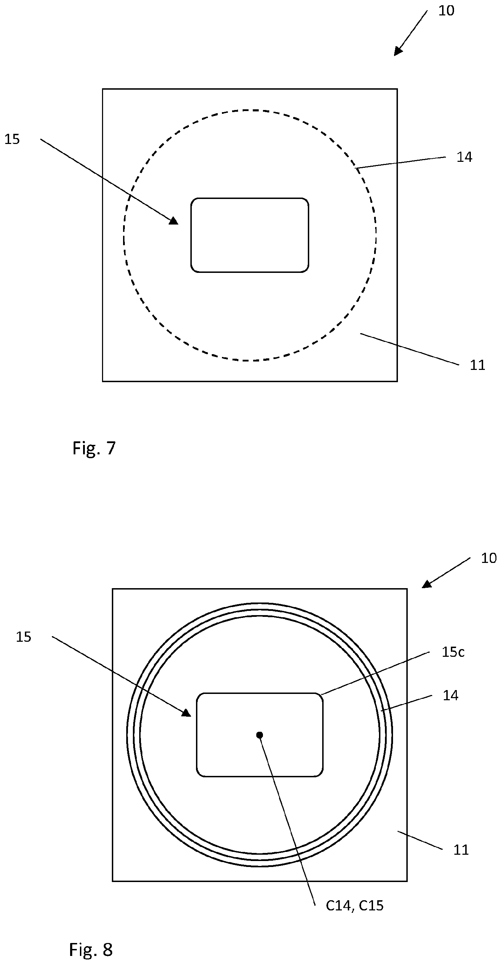

It is now referred to fig. 7 and 8. It should be noted that many features of this embodiment are similar to the above embodiments, and only differences will be described in detail here.

In figs. 7 and 8 it is shown that the main body 11 is shaped as a square, and that the feed-out opening 15 is rectangular with rounded corners 15c.

### Third embodiment

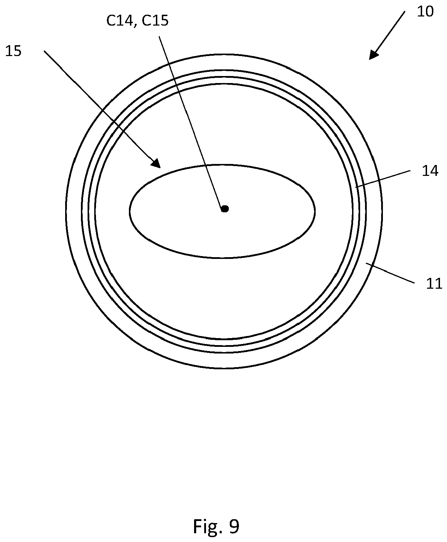

It is now referred to fig. 9. It should be noted that many features of this embodiment are similar to the above embodiments, and only differences will be described in detail here.

As in the first embodiment, the main body 11 is circular. In fig. 9 it is apparent that the feed-out opening 15 is oval or elliptical.

### Fourth embodiment

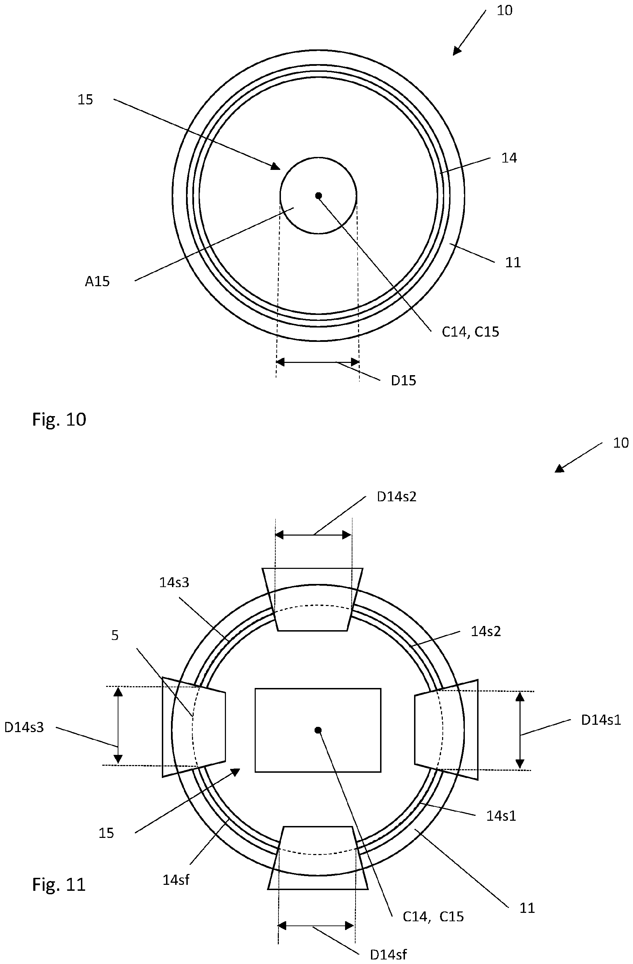

It is now referred to fig. 10. It should be noted that many features of this embodiment are similar to the above embodiments, and only differences will be described in detail here.

As in the first embodiment, the main body 11 is circular. In fig. 10 it is apparent that the feed-out opening 15 is circular and defined with a diameter D15. In the present embodiment, the diameter D15 is ca 30 mm, resulting in an area of π x 15 mm x 15 mm, i.e. 7.0 cm2, which corresponds to 11.1% of the access opening area.

### Fifth embodiment

It is now referred to fig. 11. It should be noted that many features of this embodiment are similar to the above embodiments, and only differences will be described in detail here.

As in the first embodiment, the main body 11 is circular and the feed-out opening 15 is rectangular. In fig. 11 it is apparent that the connector 14 does not form a full circle. Instead, the connector 14 comprises four connector segments 14s1, 14s2, 14s3, 14sf spaced apart from each other as indicated by distances D14s1, D14s2, D14s3, D14sf. It is apparent that each connector segment forms a circle section and that the connector segments in total have a shape enabling them to be connected to the access opening 5.

### Sixth embodiment

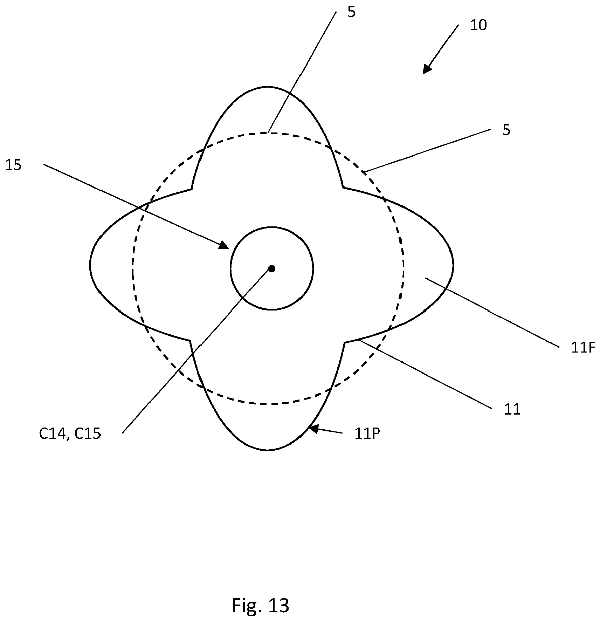

It is now referred to fig. 13. It should be noted that many features of this embodiment are similar to the above embodiments, and only differences will be described in detail here.

Here, it is shown that the main body 11 comprises four flaps 11F extending beyond the access opening 5, while other parts of the main body 11 do not extend beyond the access opening 5. The connector 14 will here be provided on the rear side of the flaps 11F.

This embodiment has a circular feed-out opening 15 similar to fig. 10.

### Further embodiments

Some further embodiments will now be described. These further embodiments may be combined with the above embodiments.

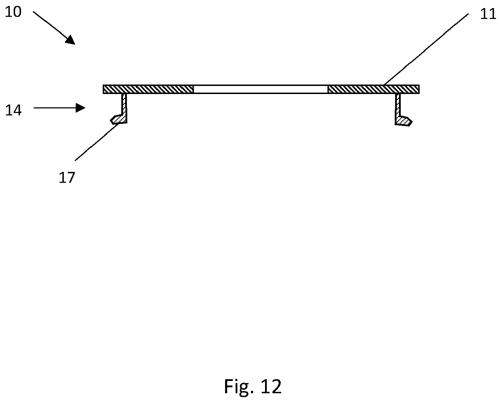

It is now referred to fig. 12. Here, the connector 14 comprises one continuous locking element 17 or several spaced apart locking elements 17. The locking element 17 is shown to form a catch which locks to the inside of the box 2 near the access opening 15. Hence, the risk of accidental release of the guiding device 10 from the access opening 5 may be reduced. The locking element 17 may be a type of snap-on locking element.

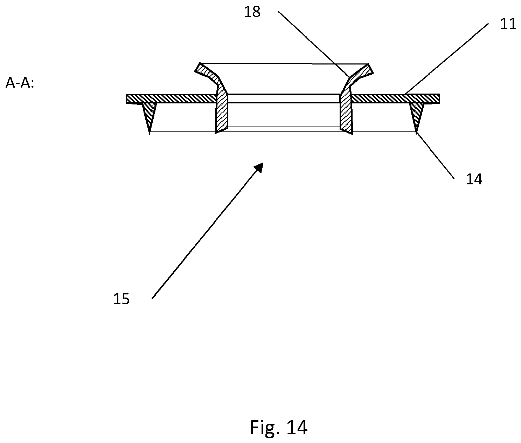

It is now referred to fig. 14. Here, the feed-out opening 15 is provided with a guiding surface 18 for guiding the cable 8 out from the cable box 2. The guiding surface 18 is here funnel-shaped.

Extensive tests have shown that a smaller feed-out diameter reduces tangling significantly. These tests also shown that is advantageous if the cable is fed out from the centre of the access opening 5 of the cable box 2, i.e. that the centre C15 of the feed-out opening 15 is coinciding with the centre C14 of the connector 14.

### LIST OF REFERENCE NUMBERS

2 - cable box
5 - access opening
8 - cable
10 - guide device
11 - main body
11P - outer perimeter
14 - connector
14s1 - first segment
14s2 - second segment
14s3 - third segment
14sf- further segment
15 - feed-out opening
15L - longest side
15S - shortest side
15f - first side
15s - second side
17 - locking device
18 - guide surface
A1 - axis
A15 - feed-out opening area
A5 - access opening area
C15 - centre
C5 - centre
D14s1 - first segment distance
D14s2 - second segment distance
D14s3 - third segment distance
D14sf - further segment distance
D5 - diameter

## Claims

1. A guide device (10) for guiding a cable (8) out from a cable box (2) having an access opening (5) defined with an access opening area (A5); wherein the guide device (10) comprises:
- a main body (11) with an outer perimeter (11P);
- a connector (14) provided on the main body (11) and connectable to the access opening (5);
- a feed-out opening (15) provided in the main body (11) for guiding a cable (8) stored within the cable box (2) out from the cable box (2);
wherein the feed-out opening (15) has a feed-out opening area (A15);
wherein the feed-out opening area (A15) is smaller than the access opening area (A5);
wherein at least a part of the outer perimeter (11P) of the main body (11) is extending beyond the access opening (5).

2. The guide device (10) according to claim 1, wherein a centre (C14) of the connector (14) is aligned with a centre (C15) of the feed-out opening (15).

3. The guide device (10) according to any one of the previous claims, wherein the feed-out opening (15) has a rectangular shape.

4. The guide device (10) according to claim 1 or 2, wherein the feed-out opening (15) has a circular shape or an elliptical shape.

5. The guide device (10) according to any one of the previous claims, wherein the feed-out opening area (A15) is 1% to 30% of the access opening area (A5).

6. The guide device (10) according to any one of the previous claims, wherein the main body (11) is disc-shaped.

7. The guide device (10) according to claim 6, wherein the disc-shaped main body (11) is planar.

8. The guide device (10) according to any one of the previous claims, wherein the main body (11) is circular having a diameter (D11) larger than a diameter (D5) of the access opening (5).

9. The guide device (10) according to any one of the previous claims, wherein the connector (14) is connectable to the access opening (5) by pushing the connector (14) into the access opening (5).

10. The guide device (10) according to any one of the previous claims, wherein the connector (14) is circular.

11. The guide device (10) according to any one of claims 1-9, wherein the connector (14) comprises at least three connector segments (14s1, 14s2, 14s3, 14sf).

12. The guide device (10) according to claim 11, wherein the at least three connector segments (14s1, 14s2, 14s3, 14sf) are spaced apart from each other.

13. The guide device (10) according to any one of the previous claims, wherein the connector (14) comprises a locking device (17).

14. The guide device (10) according to claims 11 and 13, wherein at least some of the at least three connector segments (14s1, 14s2, 14s3, 14sf) comprise a locking device (17).

15. The guide device (10) according to any one of the previous claims, wherein the feed-out opening (15) is provided with a guiding surface (18) for guiding the cable (8) out from the cable box (2).
